# EUROPEAN PATENT SPECIFICATION

(11) **EP 1 405 658 B1**
(45) Date of publication and mention of the grant of the patent: **16.03.2005**
(21) Application number: 02079183.6
(22) Date of filing: 04.10.2002
(51) Int. Cl.: A63F 9/18, G09B 3/04

(54) **Device for playing an associative game**
Assoziatives Spiel
Jeu associatife

(43) Date of publication of application: 07.04.2004
(73) Proprietor: King International B.V., 1404 HD Bussum (NL)
(72) Inventor: Den Bok, Jan, 3951 AD Maarn (NL); Obbens, Adriaan, 1405 CW Bussum (NL)
(74) Representative: de Vries, Johannes Hendrik Fokke

(56) References cited:
- DE-U- 29 717 903
- US-A- 2 902 775
- US-A- 2 970 384
- US-A- 5 183 399

## Description

The invention relates to a device for playing an associative game according to the preamble of claim 1.

The invention further relates to a game card for such a device.

The invention also relates to a set of elements for playing an associative game.

An example of a device and set for playing an associative game is known from DE-U-89 113 958.5.

The known device comprises a board with a rectangular recess, which is open to one side of the board. Main branches of a groove extend along the right hand and lower side of the recess, the main branches being provided with several side-branches. A printed card inserted into the recess lists several separated questions. To answer them, certain playing objects must be slid into the side-branches, which are located next to the respective field of the card with the question to be answered. After several of the playing objects have been slid to certain places in the side-branches, a further printed card, containing the answers to the questions posed, can be inserted into the recess, to show the player whether the correct playing objects have been slid into the several side-branches.

A problem of the known device is that the player has to insert a further card into the device to check his answers, or to re-insert the card with the questions to reveal answers printed on the back. In the former case, an extra card is needed, which can get lost, in the latter case, the use of the device becomes cumbersome. DE-U1-297 17 903 discloses a device comprising a support, which may, for example be made from a cardboard or plastic material that can be printed on. The form can be turned back around a fold, so that it is essentially book-shaped in its turned back state. On the top side of the carrier a printed area is provided that symbolically or directly depicts an assignment. Further, the top side of the carrier is provided with another print that also graphically or directly depicts suggestions for answers to the assignments set in the first printed area. A further essential part of the example shown are platelet-shaped answer elements, which comprise a print on their top side, depicting an answer symbol. Below the second printed area, indentations with cut-outs are provided in the shape of puzzle elements, associated with the suggestions for answers. The user thus has to solve the assignments set in the first printed area in such a way that the answer object with in his opinion the correct answer symbol is placed in the corresponding indentation in the carrier. The indentations are provided in an area of the support that can be turned back from the rest of the support around an axis. When this region is turned away from the support, verification symbols on the reverse side of the answer object placed in an indentation are visible through a cut-out in the indentation. By turning back the area of the support, symbols of a third printed area that symbolically depict the correct answer become visible.

It is an object of the present invention to provide a device of the type mentioned above that, when the game is played, allows the player to carry out a quick convenient check of the answers.

This object is achieved by the device according to the invention, which is characterised in that the playing surface has a plurality of verification areas on it, and in that the support structure is moveable across the playing surface between the first and the second position.

An answer object is situated in the vicinity of an answer or verification area, if a component of the distance from the answer object to that answer or verification area in at least one direction is smaller than the component in the same direction to each of the other answer or verification areas respectively. Thus, the answer object is perceived to be associated with the answer or verification area in the vicinity of which it is situated.

Because the support structure is moved over the playing surface, it is possible to display both the pictures associated with the answers and the pictures associated with a question on the same side of the device. It is therefore not necessary to use a separate card for checking the answers or to turn a card round. One could even dispense with cards, in an embodiment in which the pictures are applied directly onto the playing surface.

Preferably, the support structure comprises a section substantially covering the verification areas in the first position.

This has the advantage that a player cannot use pictures displayed over the verification areas to place the answer objects.

Preferably, the device is arranged in such a manner that any pictures shown over the answer areas are exposed to view in the second position.

Thus, in case of mistakes, the player may refer back to the answer pictures, to see which answer was mistakenly selected. This gives the game device extra educational value.

In a preferred embodiment of the game device, the body is arranged to receive a game card inserted into it in such a manner that an inserted game card is located between the playing surface and at least part of the moveable support structure, the game card covering the answer areas and the verification areas.

Thus, use can be made of pictures shown over the answer areas and verification areas that are on the card. This makes the game device more versatile, allowing it to be used with many different games. It becomes possible to use different pictures for the answers and/or for checking the answers, which pictures may be adapted to the context of a particular game, e.g. flowers for a game for learning about nature. A further advantage is that the reception site at which a particular answer object must be placed can vary according to the card inserted, so preventing a player from learning the correct positions by heart.

According to another aspect of the invention, there is provided a game card in combination with a device according to the invention, wherein a plurality of answer pictures and a plurality of verification pictures are printed on at least a first surface of the card in such a manner that, when the game card has been inserted with the first surface facing away from the playing surface of the device, each answer picture is located substantially over an answer area and each verification picture is located substantially over a verification area.

This game card is intended for use in conjunction with the embodiment of the game device that was last described above. It provides the same advantages, namely that the game to be played can be varied, simply by replacing the card, rather than by replacing the game device.

According to a further aspect of the invention, there is provided a set of elements for playing an associative game, comprising a device according to the invention.

An embodiment comprises an object having a first surface section for displaying a plurality of answer pictures over the answer areas, wherein each answer object comprises a frame suitably shaped and dimensioned to substantially enclose at least one of the answer pictures in such a manner as to leave it substantially exposed to view, when the frame is placed over the answer picture.

This set of elements for playing an associative game solves a common problem of associative games. A first known class of such sets uses answer objects that are placed on top of answer objects, thus obscuring them from view. This has the disadvantage that, once an answer object, associated with a particular question, has been assigned to a possible answer, it is awkward to go back to that question. This may occur, for example, when one later realises that the answer given to the previous question was the wrong one. Also, it is not possible to see whether the answer given to one of the previous questions is not actually more appropriate to the present question. Other classes of associative game sets require a player to place an answer object in the vicinity of an answer picture. This has the disadvantage that the visual link between answer object and answer picture is very weak, which may cause confusion, especially for very young players.

The set of elements for playing an associative game provides a more direct visual link between answer object and answer picture. This is achieved by use of the answer objects comprising a frame and by the fact that an answer picture and a frame match in terms of size and dimensions. Because the frame surrounds an answer picture, when placed over it, no confusion can arise as to which answer object has been assigned to which answer picture. An added advantage is that it is easy to refer back to previously given answers.

In a preferred embodiment, the object having a first surface section comprises a second surface section displaying a plurality of verification pictures, each verification picture being suitably shaped and dimensioned so as to be substantially enclosed by at least one frame comprised in an answer object, in such a manner as to leave the verification picture substantially exposed to view when the frame is placed over the verification picture.

This feature allows an extra range of visual effects to distinguish a correctly given answer from an incorrect one. The appearance of the frame and that of the correct verification picture for that frame can be matching. This allows an easy check of the answers and makes the game visually more appealing for very young children.

In a preferred embodiment, the first surface section further displays a plurality of question pictures wherein at least an aspect of the appearance of each question picture corresponds to a corresponding aspect of the appearance of at least a part of one of the answer objects.

This allows a connection to be made between an answer picture over which the frame of an answer object has been placed, and the question picture belonging to the question with which the answer object is associated. It is therefore possible to trace back both question and answer at a later stage.

The invention will now be explained in further detail with reference to the accompanying figures, of which:
Fig. 1 is a perspective view of an embodiment of the game device according to the invention and of an answer object;
Fig. 2 is a top plan view of the game device, showing the playing surface and the different areas on it;
Fig. 3 is a top plan view of the game device with a game card inserted, wherein the support structure for the answer objects is in a first position; and
Fig. 4 is a top plan view of the game device with the support structure in a second position, revealing the verification pictures on the card.

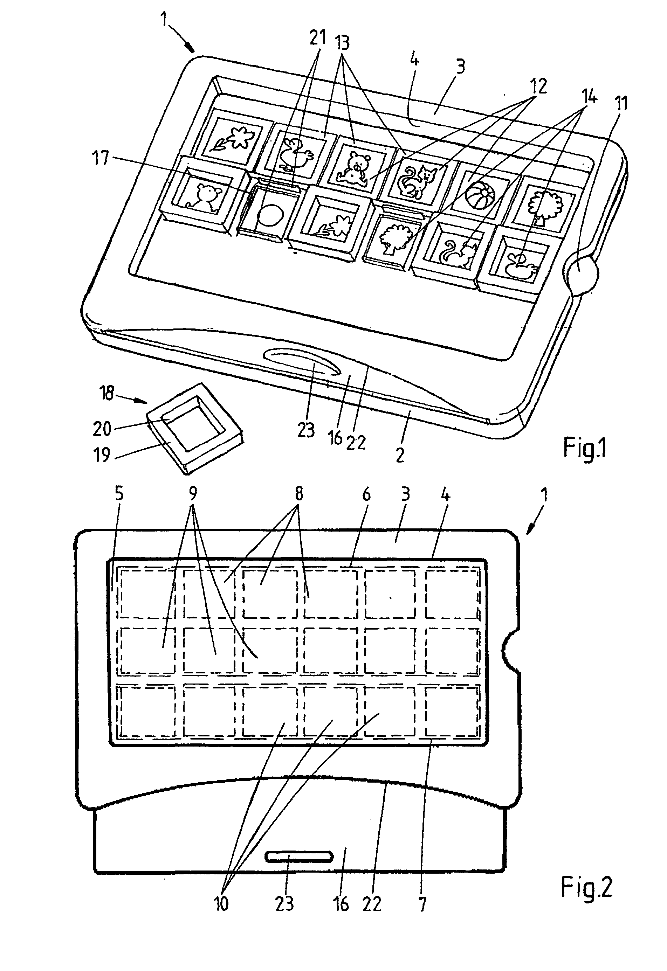

Figs. 1-4 show a first embodiment of the set of elements for playing an associative game. This embodiment is primarily suited as a learning implement for very young children, due to its easy use and visually attractive features. The set comprises a game device 1, comprising a body 2. The body 2 is advantageously made of plastic, allowing bright and attractive colouring, and making the game device safer to use by toddlers. A top side of the body 2 comprises a frame 3, surrounding a window 4.

In Fig. 2, only the game device 1 itself is shown. In this figure, a playing surface 5 is exposed to view through the window 4. The playing surface 5 is divided into a first and second surface section 6,7, respectively, of which the circumferences are indicated by dashed lines. The first surface section 6 can be thought of as comprising a number of question areas 8 and a number of answer areas 9, whilst the second surface section 7 has a number of verification areas 10. These areas 8,9,10 are not apparent from looking at the game device 1, but are defined here as an aid to distinguishing between various parts of the playing surface 5.

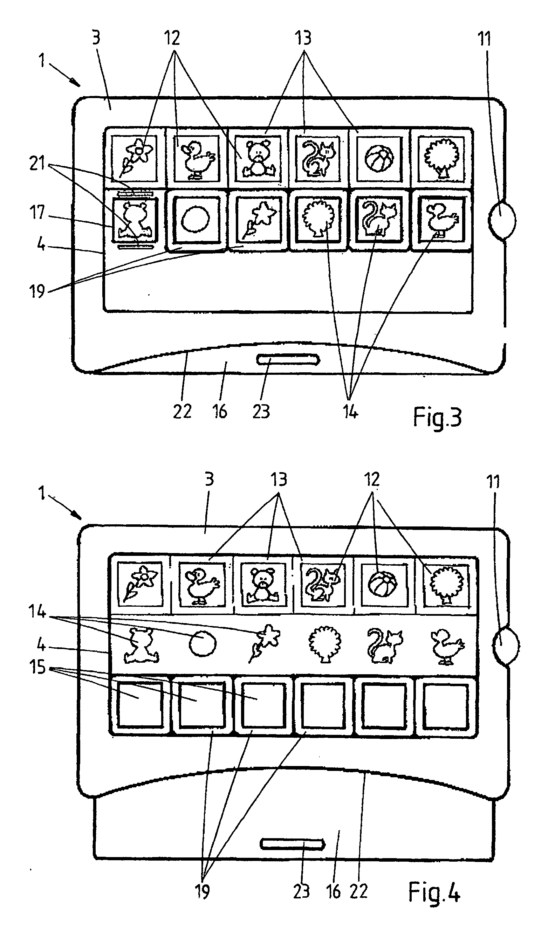

5 Fig. 4 is a top plan view of the game device 1 in the same position as in Fig. 2, only with a game card inserted. To facilitate insertion and removal of the game card, the game card is provided with a tab 11, whereas the frame 3 comprises a cut-out to allow the tab 11 to be grasped. The game device 1 may further be provided with means for releasably holding a game card in its inserted position.

When inserted, the game card is held in a position in which it covers the playing surface 5 of the game device 1. The rim of the game card is held under the frame 3.

As can be seen from Fig. 4, the game card has a first array of question pictures 12 printed thereon. When the game card is in its inserted position, each question picture 12 is located over one of the question areas 8 on the playing surface 5. The game card further has an array of answer pictures 14 printed thereon. Each answer picture 14 is located over one of the answer areas 9, when the game card has been inserted. Lastly, the game card further has an array of verification pictures 15 printed thereon. Each verification picture 15 is located over a verification area 10 after the game card has been inserted.

Referring to Fig. 1 in particular, the game device 1 further comprises a sliding support structure 16, inserted into the body 2 of the game device. The sliding support structure 16 is guided through grooves (not shown). The sliding support structure 16 basically comprises a flat panel with windows 17 in it. The windows 17 correspond in shape and dimension to the answer areas 9. The sliding support structure 16 is held in the game device 1 in such a manner that the flat panel is parallel to the playing surface 5. It is spaced at a distance from the playing surface 5, so that the game card can be inserted between the playing surface 5 and the sliding support structure 16.

In a first position (shown in Fig. 3), a section of the sliding support structure 16 hides the verification pictures 15 on the inserted game card from view, i.e. the verification areas 10 of the playing surface 5 are covered by this section. In this position, the windows 17 of the sliding support structure 16 are located over the answer areas 9, providing a view of the answer pictures 14 on an inserted game card.

Referring to Fig. 1 in particular, a further element of the game set is an answer object 18, comprising a frame 19. The frame 19 encloses a window 20, with a shape and dimensions corresponding substantially to at least one of the answer pictures 14. In other words, the answer picture 14 is substantially exposed to view.

Each answer object 18 has a unique appearance and is associated with a question. In this embodiment, an aspect of its appearance is linked to a corresponding aspect of one of the question pictures 12. The term aspect is used to denote a distinguishing visible feature such as the shape, colour, pattern or surface texture. The answer object 18 may be unique in terms of its shape, but in this embodiment, each frame 19 has a different surface decoration, i.e. pattern or colour. Each question picture 12 is surrounded by a perimeter 13 in a corresponding pattern or colour. Thus, each answer object 18 is visually linked to one of the question pictures 12. In another embodiment, the perimeter 13 and frame 19 may match in shape. For example, there could be one answer object with a triangular shape, one star-shaped, one circular, etc. A combination of colour and shape may also be used to give each answer object 18 a unique appearance.

As shown in particular in Fig. 1, ribs 21 are moulded onto the sliding support structure 16 near each window 17. The ribs 21 engage corresponding recesses (not shown) on the reverse side of an answer object 18, allowing an answer object 18 to be placed at a well-determined reception site on the sliding support structure 16. In this position the frame 19 of an answer object 18 encloses an answer picture, leaving it exposed to view. Because the question picture 12 remains visible, and is surrounded by a perimeter 13 having a similar appearance to the frame 19, there is a direct visual link between question and answer. The direct visual link can also be provided in another way than by use of a perimeter of a certain shape or colour. Alternatively, there may be an array of pictures representing a question and an arrow or line connecting each picture to another picture, with an aspect of the appearance of the other picture corresponding to that of an answer object 18.

The game is played with the sliding support structure 16 in the first position (Fig. 3). Each question picture 12 represents a question, each answer picture 14 represents a possible answer. A player picks up an answer object 18 associated with a question, determines which of the answer pictures 14 represents the answer to that question, and places the answer object 18 at the correct reception site on the sliding support structure 16. Note that each answer object 18 is associated with a question, by virtue of at least one corresponding aspect in the unique appearance of the answer object 18, in this example, the colour of the perimeter 13 and the frame 19.

After each of the answer objects 18 has been placed over a question picture 12, the answers can be checked. A cut-out 22 in the frame 3 of the game device 1 and a recess 23 in the sliding support structure 16 allow the sliding support structure 16 to be grasped. By pulling the sliding support structure 16, it can be moved to a second position, shown in Fig. 4.

In the second position, each element at a reception site is situated in the vicinity of a corresponding verification area 10 on the playing surface 5. When the game card is in the inserted position, such that each verification picture 15 is located substantially over a verification area 10, the answer object 18 is situated in the vicinity of a verification picture 15. A component of the distance from the answer object 18 to that verification picture 15 is smaller than the component in the same direction to each of the other verification pictures 15.

In a different embodiment, the answer object may be aligned with one of the verification areas, instead of being situated over it. For example, where the verification areas are arranged in a row, each answer object may form a column with one of the verification areas, so that they are perceived to be associated with one another. In this case, the component in the direction along the row of the distance from the answer object to the associated verification area is shorter than the component in that direction of the distance to each of the other answer areas.

In the embodiment shown in Figs. 1-4, the answer object 18 is actually situated over the verification area 10 in the second position, such that the verification picture 15 is substantially exposed to view through the window 20 in the frame 19 of the answer object 18. In this embodiment, an aspect of the appearance of the verification picture 15 corresponds to a corresponding aspect of the appearance of the answer object 18. In the shown embodiment, each verification picture 15 is a rectangle of a specific colour. If the answer object 18 has been placed at the correct reception site, the colour of the answer object 18, specifically of the frame 19, is the same. This provides an easy check of the answers.

The invention is not limited to the embodiments described above. For example, a game card without question pictures is also possible. In this case, a separate set of questions may be provided, with information as to which answer object belongs to each question. The questions could, for example, be read out. In another embodiment of the game device, the support structure may be rotated from a first to a second position, instead of undergoing a translation.

## Claims

1. Device for playing an associative game, comprising
a body (2) with a playing surface (5), the playing surface (5) having a plurality of answer areas (9), over which an answer picture (14) associated with a possible answer can be shown,
and a support structure (16), comprising a number of reception sites for receiving an answer object (18) with a unique appearance, associated with a question, wherein, in a first position of the support structure (16), an answer object (18) placed at a reception site is situated in the vicinity of a corresponding answer area (9), wherein the support structure (16) is moveable between the first position and a second position, in which each answer object (18) at a reception site is situated in the vicinity of a corresponding verification area (10), over which a verification picture (15) associated with a question can be shown, **characterised in that** the playing surface (5) has a plurality of verification areas (10) onit, and **in that**
the support structure (16) is moveable across the playing surface (5) between the first and the second position.

2. Device according to claim 1, wherein the support structure (16) comprises a section substantially covering the verification areas (10) in the first position.

3. Device according to claim 1 or 2, arranged in such a manner that any answer pictures (14) shown over the answer areas (9) are exposed to view in the second position.

4. Device according to any one of claims 1-3, wherein the support structure (16) comprises a panel, held in the body (2) in a position parallel to the playing surface (5), preferably in such a manner that it may be slid between the first and the second position.

5. Device according to any one of claims 1-4, wherein the body (2) comprises a frame (3), substantially enclosing the playing surface (5), wherein the support structure (16) comprises a panel, held in the body (2) in a position parallel to the playing surface (5) and between the frame (3) and the playing surface (5).

6. Device according to any one of claims 1-5, wherein the body (2) is arranged to receive a game card inserted into it in such a manner that an inserted game card is located between the playing surface (5) and at least part of the moveable support structure (16), the game card covering the answer areas (9) and the verification areas (10).

7. Game card in combination with a device according to claim 6, wherein a plurality of answer pictures (14) and a plurality of verification pictures (15) are printed on at least a first surface of the card in such a manner that, when the game card has been inserted with the first surface facing away from the playing surface (5) of the device, each answer picture (14) is located substantially over an answer area (9) and each verification picture (15) is located substantially over a verification area (10).

8. Set of elements for playing an associative game, comprising a device (1) according to any one of claims 1-6 and a plurality of answer objects (18;29) with a unique appearance, each associated with a question.

9. Set of elements according to claim 8, comprising an object (1) having a first surface section (5) for displaying a plurality of answer pictures (14) over the answer areas, wherein each answer object (18) comprises a frame (19) suitably shaped and dimensioned to substantially enclose at least one of the answer pictures (14) in such a manner as to leave it substantially exposed to view, when the frame (19) is placed over the answer picture (14).

10. Set of elements according to claim 9, wherein the object (1) having a first surface section (5) comprises a second surface section (7) displaying a plurality of verification pictures (15), each verification picture (15) being suitably shaped and dimensioned so as to be substantially enclosed by at least one frame (19) comprised in an answer object (18), in such a manner as to leave the verification picture (15) substantially exposed to view when the frame (19) is placed over the verification picture (15).

11. Set of elements according to claim 9 or 10, wherein the first surface section (5) further displays a plurality of question pictures (12) wherein at least an aspect of the appearance of each question picture (12) corresponds to a corresponding aspect of the appearance of at least a part of one of the answer objects (18).

## Patentansprüche

1. Vorrichtung zum Spielen eines assoziativen Spiels mit:
einem Körper (2) mit einer Spielfläche (5), die mehrere Antwortbereiche (9) hat, oberhalb welchen ein zu einer möglichen Antwort gehörendes Antwortbild (14) gezeigt werden kann, und einer Haltestruktur (16), die eine Anzahl von Aufnahmeorten zum Aufnehmen eines zu einer Frage gehörenden Antwortobjekts (18) mit einem einzigartigen Aussehen aufweist, wobei sich in einer ersten Position der Haltestruktur (16) ein an einem Aufnahmeort angeordnetes Antwortobjekt (18) in der Nähe eines entsprechenden Antwortbereichs (9) befindet, wobei die Haltestruktur (16) bewegbar ist zwischen der ersten Position und einer zweiten Position, in welcher sich jedes Antwortobjekt (18) an einem Aufnahmeort in der Nähe eines entsprechenden Verifizierungsbereichs (10) befindet, oberhalb welchem ein zu einer Frage gehörendes Verifizierungsbild (15) gezeigt werden kann, **dadurch gekennzeichnet, daß** auf der Spielfläche (5) mehrere Verifizierungsbereiche (10) sind und daß die Haltestruktur (16) über die Spielfläche (5) zwischen der ersten und der zweiten Position bewegbar ist.

2. Vorrichtung nach Anspruch 1, wobei die Haltestruktur (16) einen Abschnitt aufweist, der die Verifizierungsbereiche (10) in der ersten Position im wesentlichen abdeckt.

3. Vorrichtung nach Anspruch 1 oder 2, die so eingerichtet ist, daß irgendwelche oberhalb der Antwortbereiche gezeigten Antwortbilder (14) in der zweiten Position frei betrachtbar sind.

4. Vorrichtung nach einem der Ansprüche 1 bis 3, wobei die Haltestruktur (16) ein Brett aufweist, das in dem Körper (2) in einer Position parallel zur Spielfläche (5) gehalten wird vorzugsweise auf eine solche Weise, daß es zwischen der ersten und der zweiten Position verschoben werden kann.

5. Vorrichtung nach einem der Ansprüche 1 bis 4, wobei der Körper (2) einen Rahmen (3) aufweist, der die Spielfläche (5) im wesentlichen umgibt, wobei die Haltestruktur (16) ein Brett aufweist, das in dem Körper (2) in einer Position parallel zur Spielfläche (5) und zwischen dem Rahmen (3) und der Spielfläche (5) gehalten wird.

6. Vorrichtung nach einem der Ansprüche 1 bis 5, wobei der Körper (2) eingerichtet ist, um eine Spielkarte aufzunehmen, die auf solche Weise in ihm eingesetzt wird, daß sich eine eingesetzte Spielkarte zwischen der Spielfläche (5) und mindestens einem Teil der bewegbaren Haltestruktur (16) befindet, wobei die Spielkarte die Antwortbereiche (9) und die Verifizierungsbereiche (10) abdeckt.

7. Spielkarte in Kombination mit einer Vorrichtung nach Anspruch 6, wobei mehrere Antwortbilder (14) und mehrere Verifizierungsbilder (15) auf mindestens einer ersten Oberfläche der Karte auf solche Weise aufgedruckt sind, daß, wenn die Spielkarte so eingesetzt ist, daß die erste Oberfläche von der Spielfläche (5) der Vorrichtung weg schaut, sich jedes Antwortbild (14) im wesentlichen oberhalb eines Antwortbereichs (9) befindet und sich jedes Verifizierungsbild (15) im wesentlichen oberhalb eines Verifizierungsbereichs (10) befindet.

8. Satz von Elementen zum Spielen eines assoziativen Spiels, mit einer Vorrichtung (1) nach einem der Ansprüche 1 bis 6 und mehreren jeweils zu einer Frage gehörenden Antwortobjekten (18;29) mit einzigartigem Aussehen.

9. Satz von Elementen nach Anspruch 8, mit einem Objekt (1), das einen ersten Oberflächenabschnitt (5) hat, um oberhalb den Antwortbereichen mehrere Antwortbilder (14) zu zeigen, wobei jedes Antwortobjekt (18) einen Rahmen (19) aufweist, der eine geeignete Form und geeignete Abmessungen hat, um mindestens eines der Antwortbilder (14) auf solche Weise zu umgeben, daß es im wesentlichen frei betrachtbar ist, wenn der Rahmen (19) oberhalb des Antwortbilds (14) angeordnet ist.

10. Satz von Elementen nach Anspruch 9, wobei das Objekt (1), das einen ersten Oberflächenabschnitt (5) hat, einen zweiten Oberflächenabschnitt (7) aufweist, der mehrere Verifizierungsbilder (15) zeigt, wobei jedes Verifizierungsbild (15) eine geeignete Form und geeignete Abmessungen hat, um von mindestens einem Rahmen (19), der in einem Antwortobjekt (18) enthalten ist, im wesentlichen auf solche Weise umgeben zu sein, daß das Verifizierungsbild (15) im wesentlichen frei betrachtbar bleibt, wenn der Rahmen (19) oberhalb des Verifizierungsbilds (15) angeordnet ist.

11. Satz von Elementen nach Anspruch 9 oder 10, wobei der erste Oberflächenabschnitt (5) ferner mehrere Fragebilder (12) zeigt, wobei mindestens ein Aspekt des Aussehens jedes Fragebilds (12) mit einem entsprechenden Aspekt des Aussehens mindestens eines Teils eines der Antwortobjekte (18) übereinstimmt.

## Revendications

1. Dispositif pour jouer un jeu associatif, comprenant un corps (2) avec une surface de jeu (5), la surface de jeu (5) présentant une pluralité de zones de réponse (9) sur lesquelles une image de réponse (14) associée à une réponse possible peut être représentée, et une structure de support (16) comprenant plusieurs sites de réception pour recevoir un objet (18) de réponse avec un aspect remarquable, associé à une question, dans lequel dans une première position de la structure de support (16), un objet (18) de réponse placé dans un site de réception est disposé au voisinage d'une zone de réponse correspondante (9) dans lequel la structure de support (16) est mobile entre la première position et une deuxième position, dans laquelle chaque objet de réponse (18) dans un site de réception est situé au voisinage d'une zone de vérification correspondante (10), sur laquelle une image de vérification (15) associée à une question peut être représentée, **caractérisé en ce que** la surface de jeu (5) présente une pluralité de zones de vérification (10) sur celle-ci et **en ce que** la structure de support (16) est mobile au niveau de la surface de jeu (5) entre la première position et la deuxième position.

2. Dispositif selon la revendication 1, dans lequel la structure de support (16) comprend une section recouvrant essentiellement les zones de vérification (10) dans la première position.

3. Dispositif selon la revendication 1 ou 2, disposé de telle façon que n'importe quelles images de réponse (14) représentées sur les zones de réponse (9) sont exposées à la vue dans la deuxième position.

4. Dispositif selon l'une quelconque des revendications 1 à 3, dans lequel la structure de support (16) comprend un panneau maintenu dans le corps (2) dans une position parallèle à la surface de jeu (5), de préférence d'une façon telle qu'il puisse glisser entre la première position et la deuxième position.

5. Dispositif selon l'une quelconque des revendications 1 à 4, dans lequel le corps (2) comprend un cadre (3) entourant essentiellement la surface de jeu (5), la structure (16) comprenant un panneau, maintenu dans le corps (2) dans une position parallèle à la surface de jeu (5) et entre le cadre (3) et la surface de jeu (5).

6. Dispositif selon l'une quelconque des revendications 1 à 5, dans lequel le corps (2) est agencé pour recevoir une carte de jeu insérée dans celui-ci de telle façon qu'une carte de jeu insérée soit disposée entre la surface de jeu (5) et au moins une partie de la structure de support mobile (16), la carte de jeu recouvrant les zones de réponse (9) et les zones de vérification (10).

7. Carte de jeu en combinaison avec un dispositif selon la revendication 6, dans laquelle plusieurs images de réponse (14) et plusieurs images de vérification (15) sont imprimées sur au moins une première surface de la carte de telle façon que lorsque la carte de jeu a été insérée avec la première surface tournée à distance de la surface de jeu (5) du dispositif, chaque image de réponse (14) est disposée essentiellement sur une zone de réponse (9) et chaque image de vérification (15) est disposée essentiellement sur une zone de vérification (10).

8. Ensemble d'éléments pour jouer à un jeu associatif, comprenant un dispositif (1) selon l'une quelconque des revendications 1 à 6 et une pluralité d'objets de réponse (18, 29) avec un aspect remarquable, chacun associé à une question.

9. Ensemble d'éléments selon la revendication 8, comprenant un objet (1) ayant une première section de surface (5) pour afficher une pluralité d'images de réponse (14) sur les zones de réponse, dans lequel chaque objet de réponse (18) comprend un cadre (19) conformé et dimensionné de façon appropriée pour entourer essentiellement au moins l'une des images de réponse (14) afin de la laisser essentiellement exposée à la vue lorsque le cadre (19) est placé sur l'image de réponse (14).

10. Ensemble d'éléments selon la revendication 9, dans lequel l'objet (1) ayant une première section de surface (5) comprend une deuxième section de surface (7) affichant une pluralité d'images de vérification (15), chaque image de vérification (15) étant conformée et dimensionnée de façon appropriée afin d'être entourée essentiellement par au moins un cadre (19) compris dans un objet de réponse (18) afin de laisser l'image de vérification (15) essentiellement exposée à la vue lorsque le cadre (19) est placé sur l'image de vérification (15).

11. Ensemble d'éléments selon la revendication 9 ou 10, dans lequel la première section de surface (5) affiche, en outre, une pluralité d'images de question (12), dans lequel au moins un aspect de l'apparence de chaque image de question (12) correspond à un aspect correspondant de l'apparence d'au moins une partie d'un des objets de réponse (18).
